# EUROPÄISCHE PATENTANMELDUNG

(11) **EP 4 775 349 A1**
(43) Veröffentlichungstag der Anmeldung: **15.07.2026**
(21) Anmeldenummer: 25223823.3
(22) Anmeldetag: 16.12.2025
(51) Int. Cl.: B23Q 1/01, B23B 3/30

(54) **WERKZEUGMASCHINE**

(30) Priorität: 10.01.2025 DE 102025100795
(71) Anmelder: DMG MORI Bielefeld GmbH, 33689 Bielefeld (DE)
(72) Erfinder: LAXY, Robert, 33104 Paderborn (DE); HALM, Christian, 33739 Bielefeld (DE)
(74) Vertreter: MERH-IP Matias Erny Reichl Hoffmann Patentanwälte PartG mbB

(57) **Zusammenfassung**

Die vorliegende Erfindung betrifft eine Werkzeugmaschine (100), insbesondere eine Drehmaschine oder eine Dreh-Fräsmaschine, umfassend ein Maschinenbett (10) mit einer ersten Trägerseite (11), auf der sich mehrere Führungsbahnen (30a, 30b, 30c) in Längsrichtung des Maschinenbetts (10) erstrecken, die bevorzugt waagrecht und bevorzugt parallel zueinander angeordnet sind, einen auf der ersten Trägerseite (11) angeordneten ersten Spindelträger (13), der dazu eingerichtet ist, eine erste Arbeitsspindel (13a) zu halten, einen auf der ersten Trägerseite (11) angeordneten Hauptschlitten (15) mit einem Hauptträger (14), der als zweiter Spindelträger (14) ausgeführt und dazu eingerichtet ist, eine zweite Arbeitsspindel (14a) zu halten, und/oder als Reitstock ausgeführt und dazu eingerichtet ist, eine Reitstockspitze zu halten, mindestens einen auf der ersten Trägerseite (11) angeordneten ersten Hilfs-schlitten (16a, 16b) mit einem ersten Hilfsträger (17a, 17b), der zwischen dem ersten Spindelträger (13) und dem Hauptschlitten (15) mit dem Hauptträger (14) angeordnet ist, wobei der Hauptschlitten (15) und der mindestens eine erste Hilfsschlitten (16a, 16b) jeweils auf mindestens zwei der mehreren Führungsbahnen (30a, 30b, 30c) auf der ersten Trägerseite (11) geführt und in Längsrichtung des Maschinenbetts (10) verfahrbar sind, und eine gemeinsame Führungsbahn (30a, 30b, 30c) und mindestens eine separate Führungsbahn (30a, 30b, 30c) aufweisen.

## Beschreibung

Die vorliegende Erfindung betrifft eine Werkzeugmaschine, insbesondere eine Drehmaschine oder eine Dreh-Fräsmaschine.

### Hintergrund

Werkzeugmaschinen eines generischen Typs, wie beispielsweise eine Drehmaschine oder eine Dreh-/ Fräsmaschine, umfassen typischerweise ein Maschinenbett oder Maschinengestell, das mit zumindest zwei drehbar montierten Arbeitsspindeln ausgestattet sein kann, die einander zugewandt sind und parallele oder koaxiale Spindelachsen aufweisen, wobei die Spindeln Werkstücke empfangen können, die auf der Werkzeugmaschine bearbeitet werden. Um die Werkzeuge für die Bearbeitung (Bearbeitungseinheiten) bereitzustellen, werden Werkzeugträger bereitgestellt, die in der Regel auf beweglichen Werkzeugträgerschlitten zur Verfügung stehen, die am Maschinenbett der Maschine angeordnet sind und mittels einer oder mehrerer Linearachsen in Beziehung zu den Arbeitsspindeln bewegt werden können.

Moderne Dreh-/ Drehfräsmaschine benötigen neben einem Spindelträger und einem Reitstock bzw. einem Gegenspindelschlitten oftmals zusätzliche Multifunktionsschlitten wie Lünetten-Schlitten, Revolverschlitten, Werkzeugträger-schlitten oder Messmittelschlitten. Diese können entweder auf gleichen Führungsbahnen wie der Reitstock bzw. der Gegenspindelschlitten oder auf separaten Führungsbahnen neben den bzw. unterhalb der Führungsbahnen des Reitstocks oder Gegenspindelschlittens angeordnet sein.

Um kurze wellenartige Werkstücke in die Hauptspindel einzuspannen oder an diese zu übergeben, muss die Reitstockspitze bzw. die Gegenspindel nahe an der Hauptspindel positioniert sein. Dazu muss der Reitstock oder der Gegenspindelschlitten die Multifunktionsschlitten passieren können oder die Reitstockspitze bzw. die Gegenspindel muss sich über die Multifunktionsschlitten erstrecken. Im ersten Fall können der Reitstock bzw. der Gegenspindelschlitten und die Multifunktionsschlitten auf separaten Führungsbahnen in Längsrichtung der Dreh/-Drehfräsmaschine verfahrbar sein, und im zweiten Fall kann der Reitstock bzw. der Gegenspindelschlitten eine entsprechende Kröpfung aufweisen, die eine Erstreckung der Reitstockspitze bzw. der Gegenspindel über die Multifunktionsschlitten ermöglicht.

Beispielsweise zeigt WO 02/081132 A2 eine Drehmaschine, umfassend ein Maschinengestell, auf welchem zwei Spindelgehäuseträger mit jeweils einer Arbeitsspindel in Z-Richtung relativ zueinander bewegbar angeordnet sind, wobei jeder Arbeitsspindel ein Werkzeugträger zugeordnet ist. Die beiden Spindelgehäuseträger sind auf Spindelgehäuseträgerschlitten angeordnet, die auf gleichen Führungsbahnen wie Schlitten der Werkzeugträger angeordnet sind, und daher eine Kröpfung aufweisen, um eine Übergabe eines Werkstücks von der ersten in die zweite Arbeitsspindel über die Werkzeugträger hinweg zu ermöglichen,

Eine solche Kröpfung kann jedoch nachteilig für die Stabilität der Spindelgehäuseträgerschlitten sein. Auf der anderen Seite können zusätzliche Führungsbahnen, mit denen eine Kröpfung vermieden werden kann, zu größeren Abmaßen der Dreh-/ Drehfräsmaschine führen.

Eine Aufgabe der vorliegenden Erfindung ist es, eine Werkzeugmaschine, insbesondere eine Drehmaschine oder eine Dreh-Fräsmaschine bereitzustellen, die eine Positionierung einer Reitstockspitze oder einer Gegenspindel in unmittelbarer Nähe der Hauptspindel ermöglicht ohne die Abmaße der Maschine zu vergrößern und/oder die Stabilität des Reitstocks oder Gegenspindelschlittens zu beeinträchtigen.

Zur Lösung der Aufgaben werden die Merkmale der unabhängigen Ansprüche vorgeschlagen. Vorteilhafte Ausgestaltungen finden sich in den abhängigen Ansprüchen.

Die erfindungsgemäße Werkzeugmaschine, die insbesondere eine Drehmaschine oder eine Dreh-Fräsmaschine sein kann, umfasst ein Maschinenbett mit einer ersten Trägerseite, auf der sich mehrere Führungsbahnen in Längsrichtung des Maschinenbetts erstrecken, die bevorzugt waagrecht und bevorzugt parallel zueinander angeordnet sind. Insbesondere kann die erste Trägerseite eine erste Ebene aufspannen, auf der die mehreren Führungsbahnen nebeneinander angeordnet sind.

Gemäß einer Ausführungsform kann das Maschinenbett als Schrägbett ausgeführt sein, dessen erste Trägerseite in einem vorbestimmten Neigungswinkel zu einer Querrichtung des Maschinenbetts angeordnet ist. Die Längsrichtung des Maschinenbetts soll dabei einer Z-Richtung, die Querrichtung des Maschinenbetts einer Y-Richtung und eine vertikale Richtung des Maschinenbetts soll einer X-Richtung der Werkzeugmaschine entsprechen. Die erste Trägerseite kann folglich derart an dem Maschinenbett angeordnet sein, dass in dessen Seitenansicht ein vorbestimmter Neigungswinkel zwischen einer Kante der Trägerseite und der Y-Richtung vorliegt. Der vorbestimmte Neigungswinkel kann beispielsweise in einem Bereich von 30° bis 90 °, insbesondere bei 45° liegen. Dadurch kann ein Maschinenbett bereitgestellt werden, das sowohl äußerst kompakt als auch äußerst steif ausgeführt sein kann.

Auf der ersten Trägerseite ist ein Spindelträger angeordnet, der dazu eingerichtet ist eine erste Arbeitsspindel zu halten. Die erste Arbeitsspindel kann insbesondere dazu dienen, ein erstes Werkstück aufzunehmen. Der Spindelträger kann fest mit der ersten Trägerseite verbunden sein. Alternativ kann der Spindelträger einen Spindelträgerschlitten umfassen, der auf mindestens zwei der mehreren Führungsbahnen auf der ersten Trägerseite geführt und in Längsrichtung des Maschinenbetts verfahrbar ist.

Zudem ist auf der ersten Trägerseite ein Hauptschlitten mit einem Hauptträger angeordnet, der als zweiter Spindelträger ausgeführt und dazu eingerichtet ist, eine zweite Arbeitsspindel zu halten. Die zweite Arbeitsspindel kann insbesondere dazu dienen, ein zweites Werkstück aufzunehmen. Alternativ ist der Hauptträger als Reitstock ausgeführt und dazu eingerichtet, eine Reitstockspitze zu halten. In diesem Fall kann das erste Werkstück z.B. auf einer Seite von der ersten Arbeitsspindel und auf einer gegenüberliegenden Seite von der Reitstockspitze aufgenommen werden. Es ist ebenso möglich, dass der Hauptträger an dem Hauptschlitten sowohl als zweiter Spindelträger als auch als Reitstock fungiert, indem beispielsweise eine Reitstockspitze in dem zweiten Spindelträger aufgenommen wird.

Zweckmäßigerweise können die zweite Arbeitsspindel oder die Reitstockspitze der ersten Arbeitsspindel zugewandt sein und eine Spindelachse der zweiten Arbeitsspindel bzw. die Achse durch die Reitstockspitze können parallel, insbesondere koaxial zu einer Spindelachse der ersten Arbeitsspindel ausgerichtet sein.

Zudem ist auf der ersten Trägerseite, zwischen dem ersten Spindelträger und dem Hauptschlitten, mindestens ein erster Hilfsschlitten mit einem ersten Hilfsträger angeordnet.

Der Hauptschlitten und der mindestens eine erste Hilfsschlitten sind jeweils auf mindestens zwei der mehreren Führungsbahnen auf der ersten Trägerseite geführt und in Längsrichtung des Maschinenbetts verfahrbar. Insbesondere können der Hauptschlitten und der mindestens eine erste Hilfsschlitten in Z-Richtung parallel zu den Spindelachsen der ersten und zweiten Arbeitsspindel bzw. der Achse durch die Reitstockspitze verfahrbar sein.

In einer Ausführungsform kann die Werkzeugmaschine ferner eine zweite Trägerseite umfassen, die angrenzend an die erste Trägerseite angeordnet ist und deren Breite sich parallel zur Querrichtung des Maschinenbetts erstreckt. Insbesondere kann die zweite Trägerseite eine zweite Ebene angrenzend an die erste Ebene aufspannen, welche parallel zur Y-Z-Ebene der Werkzeugmaschine verläuft. Zweckmäßigerweise kann die zweite Trägerseite dabei an eine obere Längskante der geneigten ersten Trägerseite angrenzen. Auf der zweiten Trägerseite können sich ebenfalls mehrere Führungsbahnen in Längsrichtung des Maschinenbetts erstrecken, die bevorzugt waagrecht und bevorzugt parallel zueinander angeordnet sind.

Auf der zweiten Trägerseite kann mindestens ein zweiter Hilfsschlitten mit einem zweiten Hilfsträger angeordnet sein, der bevorzugt als Werkzeugträger ausgebildet sein kann. Der zweite Hilfsschlitten kann auf mindestens zwei der mehreren Führungsbahnen auf der zweiten Trägerseite geführt und parallel zu einer Verfahrrichtung des mindestens einen ersten Hilfsschlittens verfahrbar sein. Insbesondere kann der zweite Hilfsschlitten als Fahrgestell ausgebildet sein. Der Werkzeugträger auf dem zweiten Hilfsschlitten kann insbesondere dazu eingerichtet sein, Dreh- oder Fräswerkzeuge aufzunehmen, um von oben Dreh- bzw. Fräsbearbeitungen an den in der ersten und/oder zweiten Arbeitsspindel aufgenommenen Werkstücken vorzunehmen. Dazu kann der Werkzeugträger an dem zweiten Hilfsschlitten in X-Richtung verfahren werden. Zudem kann der zweite Hilfsschlitten bzw. der Werkzeugträger eine B-Achse aufweisen, die eine Drehung des Werkzeugträgers um eine Achse parallel zur Y-Richtung erlaubt.

Der erste Hilfsträger des mindestens einen ersten Hilfsschlittens auf der ersten Trägerseite des Maschinenbetts kann insbesondere als Lünettenträger, Revolverträger, Werkzeugträger oder Messmittelträger ausgebildet sein. Da der mindestens eine erste und der zweite Hilfsschlitten parallel zueinander verfahrbar sind, kann ein in der ersten und/oder zweiten Arbeitsspindel eingespanntes Werkstück von zwei Seiten bearbeitet werden, wenn der erste Hilfsträger als Werkzeugträger oder Revolverträger ausgebildet ist. Beispielsweise kann das Werkstück mittels des Werkzeugträgers auf dem zweiten Hilfsschlitten von oben und mittels des Werkzeugträgers/Revolverträgers auf dem mindestens einen ersten Hilfsschlitten von unten bearbeitet werden. Im Falle eines Lünettenträgers auf dem mindestens einen ersten Hilfsschlitten können lange Werkstücke, die in einer oder in beiden Arbeitsspindeln eingespannt sind, von unten abgestützt werden, während ein Messmittelträger eine Maßhaltigkeitsprüfung mit unterschiedlichen Messmitteln im Rahmen einer Dreh- und/oder Fräsbearbeitung ermöglicht.

Der Hauptschlitten und der mindestens eine erste Hilfsschlitten auf der ersten Trägerseite des Maschinenbetts weisen eine gemeinsame Führungsbahn und mindestens eine separate Führungsbahn auf. Mit anderen Worten ist der mindestens eine erste Hilfsschlitten sowohl auf mindestens einer gemeinsamen Führungsbahn mit dem Hauptschlitten als auch auf mindestens einer eigens für den/die Hilfsschlitten vorgesehenen Führungsbahn verfahrbar. Dadurch ist für den mindestens einen Hilfsschlitten z.B. nur eine zusätzliche Führungsbahn erforderlich, welche nur eine geringe Vergrößerung der ersten Trägerseite zur Folge hat.

Gemäß einer Ausführungsform kann der Hauptschlitten mindestens auf zwei äußeren Führungsbahnen auf der ersten Trägerseite geführt sein. Wenn das das Maschinenbett als Schrägbett ausgeführt ist und die erste Trägerseite in einem vorbestimmten Neigungswinkel zu einer Querrichtung des Maschinenbetts angeordnet ist, so kann eine der zwei äußeren Führungsbahnen einer oberen und eine andere der zwei äußeren Führungsbahnen einer unteren Führungsbahn auf der geneigten ersten Trägerseite entsprechen. Der mindestens eine erste Hilfsschlitten kann auf mindestens einer mittleren und auf einer der beiden äußeren Führungsbahnen geführt sein. Insbesondere kann der mindestens eine erste Hilfsschlitten auf der mindestens einen mittleren Führungsbahn und auf einer äußeren Führungsbahn geführt sein, die an eine äußere Längsseite des Maschinenbetts angrenzt. Im Falle einer geneigten ersten Trägerseite kann diese äußere Führungsbahn der unteren Führungsbahn entsprechen.

Wenn der Hauptschlitten beispielsweise auf der oberen und unteren Führungsbahn und der mindestens eine erste Hilfsschlitten auf der mittleren und unteren Führungsbahn der geneigten ersten Trägerseite verfahren werden kann, so kann der Hauptschlitten breiter ausgeführt sein als der mindestens eine erste Hilfsschlitten mit dem ersten Hilfsträger. Insbesondere kann sich der Hauptschlitten über nahezu eine komplette Breite der ersten Trägerseite erstrecken, wodurch dieser sehr robust ausgeführt werden kann. Aufgrund des vorbestimmten Neigungswinkels, mit dem die erste Trägerseite auf dem Maschinenbett ausgebildet ist, kann dabei eine Ausdehnung des Hauptschlittens in Y-Richtung der Werkzeugmaschine begrenzt werden. Auf diese Weise kann sowohl eine kompakte Bauweise der Werkzeugmaschine als auch eine hohe Stabilität des Hauptschlittens mit dem Hauptträger realisiert werden.

Insbesondere können zwei erste Hilfsschlitten mit jeweils einem ersten Hilfsträger auf der mindestens einen mittleren und einer äußeren Führungsbahn der ersten Trägerseite geführt und in Längsrichtung (Z-Richtung) des Maschinenbetts verfahrbar sein. Dabei kann ein erster der beiden ersten Hilfsschlitten dem Spindelträger und ein zweiter der beiden ersten Hilfsschlitten dem Hauptschlitten mit dem Hauptträger zugeordnet sein

Gemäß einer Ausführungsform können der erste Spindelträger und/oder der Hauptschlitten mit dem Hauptträger derart ausgebildet sein, dass sie in einer Vorderansicht eine L-Form aufweisen. Insbesondere können sowohl der erste Spindelträger als auch der Hauptschlitten mit dem Hauptträger in ihrer Vorderansicht eine L-Form aufweisen. Dabei kann die erste Arbeitsspindel in einem horizontalen Schenkel des L-förmigen ersten Spindelträgers aufgenommen sein, und die zweite Arbeitsspindel bzw. die Reitstockspitze kann in dem Hauptträger aufgenommen sein, der hier den horizontalen Schenkel der aus Hauptschlitten und Hauptträger ausgebildeten L-Form darstellt.

Mittels der L-Form des ersten Spindelträgers und/oder des Hauptschlittens mit dem Hauptträger kann in diesem bzw. in diesen eine Aussparung ausgebildet sein, die dazu eingerichtet ist, den mindestens einen ersten Hilfsschlitten mit dem ersten Hilfsträger aufzunehmen. Wenn sowohl in dem ersten Spindelträger als auch in dem Hauptschlitten mit dem Hauptträger eine Aussparung basierend auf der L-Form vorgesehen ist, so kann der erste der beiden ersten Hilfsschlitten mit einem ersten Hilfsträger von dem Spindelträger und der zweite der beiden ersten Hilfsschlitten mit einem weiteren ersten Hilfsträger von dem Hauptschlitten mit dem Hauptträger aufgenommen werden. Dies kann z.B. dann der Fall sein, wenn der Hauptträger als zweiter Spindelträger fungiert und der Hauptschlitten sich dem ersten Spindelträger nähert um beispielsweise ein Werkstück von der zweiten Arbeitsspindel in die ersten Arbeitsspindel zu übergeben.

Gemäß einer Ausführungsform können die mehreren Führungsbahnen auf der ersten Trägerseite derart ausgebildet sein, dass eine erste äußere Führungsbahn zumindest teilweise mit der mindestens einen mittleren Führungsbahn überlappt. Ebenso kann die mindestens eine mittlere Führungsbahn zumindest teilweise mit einer zweiten äußeren Führungsbahn überlappen. Im Falle einer geneigten ersten Trägerseite kann die erste äußere Führungsbahn der oberen und die zweite äußere Führungsbahn der unteren Führungsbahn entsprechen.

Beispielsweise kann die erste Trägerseite Stufen umfassen, auf deren Oberseite optional z.B. Bleche, Platten oder andere geeignete Abdeckungen angeordnet sein können, die über die jeweiligen Stufenoberseiten hinausragen und somit die Überlappung mit der nächsten Führungsbahn ausbilden. Die Stufenoberseite bezeichnet dabei eine Seite auf der ersten Trägerseite, die parallel zu der von dieser aufgespannten ersten Ebene verläuft.

Zweckmäßigerweise können in den überlappenden Abschnitten der Führungsbahnen Führungsschienen angeordnet sein, die dazu eingerichtet sind, mit Führungselementen an dem Hauptschlitten und dem mindestens einen ersten Hilfsschlitten zusammenzuwirken, um diese entlang der Führungsschienen auf den jeweiligen Führungsbahnen zu verfahren. Insbesondere kann auf einer Seite der Stufen, die senkrecht zu deren Stufenoberseite angeordnet ist, jeweils eine Führungsschiene angeordnet sein. Die Abdeckungen können derart über die jeweilige Stufenoberseite hinausragen, dass sie die Führungsschiene überdecken. Die Stufen mit den Abdeckungen auf der Stufenoberseite und den Führungsschienen auf einer Stufenseite senkrecht zur Stufenoberseite bilden dabei gemeinsam die Führungsbahnen aus.

In die Führungsschienen der Führungsbahnen können die Führungselemente des Hauptschlittens und des mindestens einen ersten Hilfsschlittens eingreifen. Die Führungsschienen können beispielsweise als Linearführungen mit Linearführungsschuhen als Führungselemente ausgebildet sein. Insbesondere kann der Hauptschlitten mit dem Hauptträger auf der oberen Führungsbahn mittels zweier Führungselemente und auf der unteren Führungsbahn mittels eines Führungselements entlang der jeweiligen Führungsschiene geführt werden, um der L-Form Rechnung zu tragen und den Hauptträger ausreichend abzustützen.

Die stufenförmige Anordnung der Führungsbahnen und die Anordnung der Führungsschienen senkrecht zu den Stufenoberseiten führt zu einem besonders kompakten Aufbau des Maschinenbetts der Werkzeugmaschine und verhindert, dass Späne zwischen die Führungsschienen und die Führungselemente gelangen. Zudem ermöglicht es dieser Aufbau relativ breite Führungsbahnen darzustellen, die eine stabile Führung des Hauptschlittens und des mindestens einen ersten Hilfsschlittens sicherstellen.

### Kurzbeschreibung der Figuren

Fig. 1 zeigt schematisch eine Werkzeugmaschine gemäß einem Ausführungsbeispiel der Erfindung in einer Vorderansicht.
Fig. 2 zeigt einen Ausschnitt der Werkzeugmaschine aus Figur 1 in einer Vorderansicht, in dem sich ein verfahrbarer zweiter Spindelträger in einer nächstmöglichen Position zu einem ersten Spindelträger befindet.
Fig. 3 zeigt die Werkzeugmaschine aus den Figuren 1 und 2 in einer Seitenansicht.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. In den Figuren sind gleiche Elemente mit gleichen Bezugszeichen versehen, so dass auf eine wiederholte Beschreibung der Elemente verzichtet wird, sofern dies nicht notwendig ist.

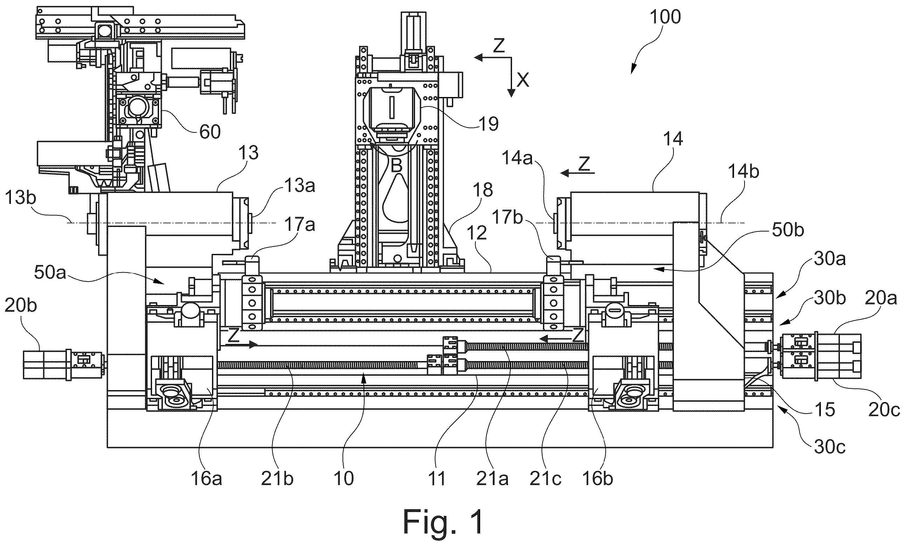

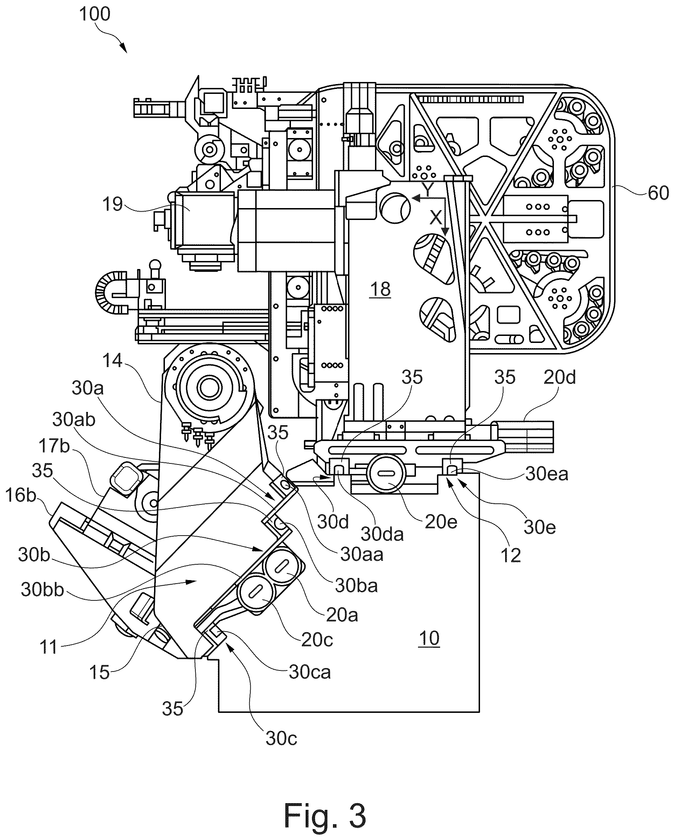

Fig. 1 zeigt schematisch eine Werkzeugmaschine 100 gemäß einem Ausführungsbeispiel der Erfindung in einer Vorderansicht. Eine Längsrichtung der Werkzeugmaschine 100 ist dabei als Z-Richtung, eine Querrichtung der Werkzeugmaschine 100 als Y-Richtung (siehe Figur 3) und eine vertikale Richtung der Werkzeugmaschine 100 als X-Richtung bezeichnet.

Die Werkzeugmaschine 100, die vorliegend als Dreh-Fräsmaschine 100 ausgeführt ist, weist ein Maschinenbett 10 auf, das eine erste Trägerseite 11 und eine zweite Trägerseite 12 umfasst. Das Maschinenbett 10 ist als Schrägbett ausgebildet, wobei die erste Trägerseite 11 in einem vorbestimmten Neigungswinkel zu der Y-Richtung der Werkzeugmaschine 100 bzw. des Maschinenbetts 10 an diesem angeordnet ist (siehe Figur 3).

Auf der ersten Trägerseite ist ein erster Spindelträger 13 angeordnet, der eine erste Arbeitsspindel 13a hält. Die erste Arbeitsspindel 13a kann insbesondere dazu dienen, ein erstes Werkstück (nicht dargestellt) aufzunehmen. Der erste Spindelträger 13 ist, in der in Figur 1 gezeigten Vorderansicht, der Werkzeugmaschine 100 an dem linken äußeren Ende der ersten Trägerseite 11 angebracht und vorliegend fest mit dieser verbunden. Es ist jedoch ebenso möglich, dass der erste Spindelträger 13 einen Spindelträgerschlitten (nicht dargestellt) umfasst, der in Z-Richtung auf der ersten Trägerseite 11 verfahren werden kann.

Dazu sind auf der ersten Trägerseite 11 drei Führungsbahnen 30a, 30b, 30c parallel zueinander angebracht, die sich waagrecht in Z-Richtung des Maschinenbetts 10 erstrecken. Es können auch mehr als drei Führungsbahnen 30a, 30b, 30c auf der ersten Trägerseite 11 vorhanden sein. Die Führungsbahnen 30a, 30b, 30c sind parallel zu einer Oberfläche der geneigten ersten Trägerseite 11 und in Y-Richtung des Maschinenbetts 10 aneinander angrenzend auf dieser angeordnet. Sie umfassen in eine obere Führungsbahn 30a, eine mittlere Führungsbahn 30b und eine untere Führungsbahn 30c.

Zusätzlich zu dem ersten Spindelträger 13 ist auf der ersten Trägerseite 11 ein Hauptschlitten 15 mit einem Hauptträger 14 angeordnet, der vorliegend als zweiter Spindelträger 14 ausgeführt ist und eine zweite Arbeitsspindel 14a hält. Der Hauptschlitten 15 mit dem zweiten Spindelträger 14 und der zweiten Arbeitsspindel 14a ist gegenüber dem ersten Spindelträger 13 angeordnet, wobei der erste und der zweite Spindelträger 13, 14 bzw. die erste und zweite Arbeitsspindel 13a, 14a einander zugewandt sind. Insbesondere ist eine Spindelachse 14b der zweiten Arbeitsspindel 14a koaxial zu einer Spindelachse 13b der ersten Arbeitsspindel 13a angeordnet

Die zweite Arbeitsspindel 14a kann insbesondere dazu dienen, ein zweites Werkstück (nicht dargestellt) aufzunehmen. Alternativ kann der Hauptträger 14 als Reitstock (nicht dargestellt) ausgeführt sein und eine Reitstockspitze umfassen. Es ist ebenso möglich, dass der Hauptträger 14 an dem Hauptschlitten 15 sowohl als zweiter Spindelträger 14a als auch als Reitstock fungiert, indem beispielsweise eine Reitstockspitze in dem zweiten Spindelträger 14 aufgenommen wird.

In der in Figur 1 gezeigten Vorderansicht der Werkzeugmaschine 100 ist der Hauptschlitten 15 mit dem zweiten Spindelträger 14 und der zweiten Arbeitsspindel 14a im Bereich eines rechten äußeren Endes der ersten Trägerseite 11 angeordnet, so dass ein Abstand zwischen dem ersten und dem zweiten Spindelträger 13, 14 maximal ist. Wie durch einen Pfeil oberhalb des zweiten Spindelträgers 14 angedeutet, kann der Hauptschlitten 15 in Z-Richtung an den ersten Spindelträger herangefahren werden.

Des Weiteren sind auf der ersten Trägerseite 11, zwischen dem ersten Spindelträger 13 und dem Hauptschlitten 15, zwei erste Hilfsschlitten 16a, 16b mit jeweils einem ersten Hilfsträger 17a, 17b angeordnet. Die ersten Hilfsträger 17a, 17b sind vorliegend als Revolverträger 17a, 17b ausgeführt, in denen vorliegend jeweils ein nicht näher bezeichneter Bohrer als Werkzeug eingespannt ist. Die Revolverträger 17a, 17b ermöglichen es ein in der ersten bzw. zweiten Arbeitsspindel 13a, 13b eingespanntes Werkstück mittels einer Vielzahl von Werkzeugen zu bearbeiten. Es ist ebenso möglich, dass die ersten Hilfsträger 17a, 17b als Lünettenträger oder Messmittelträger ausgebildet sind. Dabei ist, in der in Figur 1 gezeigten Vorderansicht, ein linker erster Hilfsschlitten 16a mit dem Revolverträger 17a dem ersten Spindelträger 13 und ein rechter erster Hilfsschlitten 16b mit dem Revolverträger 17b dem Hauptschlitten 15 mit dem zweiten Spindelträger 14 zugeordnet. Mit anderen Worten können Werkstücke, die in dem ersten Spindelträger 13 eingespannt sind mittels Werkzeugen des Revolverträgers 16a und Werkstücke, die in dem zweiten Spindelträger eingespannt sind mittels Werkzeugen des Revolverträgers 16b bearbeitet werden.

Der Hauptschlitten 15 und die beiden Hilfsschlitten 16a, 16b sind jeweils auf zwei der drei Führungsbahnen 30a, 30b, 30c auf der ersten Trägerseite 11 geführt und in Z-Richtung des Maschinenbetts 10 parallel zu den Spindelachsen 13b, 14b der ersten und zweiten Arbeitsspindel 13a, 13b verfahrbar (angedeutet durch die Pfeile in Z-Richtung). Das Verfahren erfolgt mittels Linearantrieben, die jeweils einen Antriebsmotor 20a, 20b, 20 c und Antriebsspindeln 21a, 21b, 21c umfassen. Dabei wird die Antriebsspindel 21a des Hauptschlittens 15 von dem Antriebsmotor 20a angetrieben, der sich auf einer rechten Seite des Maschinenbetts 10 befindet.

Die zweite Trägerseite 12 der Werkzeugmaschine ist angrenzend an die erste Trägerseite 11 an dem Maschinenbett 10 angeordnet und grenzt insbesondere an eine obere Längskante der geneigten ersten Trägerseite 11 an. Dabei erstreckt sich eine Breite der zweiten Trägerseite 12 parallel zu der Y-Richtung der Werkzeugmaschine 100 (siehe Figur 3). Auf der zweiten Trägerseite ist ein zweiter Hilfsschlitten 18 mit einem zweiten Hilfsträger 19 angeordnet, der in Z-Richtung, insbesondere parallel zu der Verfahrrichtung der beiden ersten Hilfsschlitten 16a, 16b, verfahren werden kann (angedeutet durch den Pfeil in Z-Richtung).

Der zweite Hilfsträger 19 ist vorliegend als Werkzeugträger 19 ausgeführt und kann insbesondere dazu eingerichtet sein, Dreh- oder Fräswerkzeuge aufzunehmen, um von oben Dreh- bzw. Fräsbearbeitungen an in der ersten und/oder zweiten Arbeitsspindel 13a, 13b aufgenommenen Werkstücken vorzunehmen. Dazu kann der Werkzeugträger 19 an dem zweiten Hilfsschlitten 18 in X- und Y-Richtung verfahren werden (angedeutet durch den Pfeil in X-Richtung in Figur 1 und den Pfeil in Y-Richtung in Figur 3). Zudem kann der zweite Hilfsschlitten 18 bzw. der Werkzeugträger 19 eine B-Achse aufweisen, die eine Drehung des Werkzeugträgers 18 um eine Achse parallel zur Y-Richtung erlaubt (angedeutet durch den gekrümmten Pfeil B).

In der in Figur 1 gezeigten Vorderansicht der Werkzeugmaschine 100 ist zudem an einem linken Ende der zweiten Trägerseite 12 ein Werkzeugmagazin 60 angeordnet, dass eine Vielzahl von nicht näher bezeichneten unterschiedlichen Werkzeugen aufweist, mit denen der Werkzeugträger 18 auf dem zweiten Hilfsschlitten bestückt werden kann.

Da der zweite Hilfsschlitten 18 und die beiden ersten Hilfsschlitten 16a, 16b parallel zueinander verfahrbar sind, kann ein in der ersten und/oder zweiten Arbeitsspindel 13a, 13b eingespanntes Werkstück von zwei Seiten bearbeitet werden. Beispielsweise kann das Werkstück mittels des Werkzeugträgers 19 auf dem zweiten Hilfsschlitten 17 von oben und mittels der Revolverträger 17a, 17b auf den ersten Hilfsschlitten 16a, 16b von unten bearbeitet werden.

Der Hauptschlitten 15 und die Hilfsschlitten 16a, 16b auf der ersten Trägerseite 11 haben eine gemeinsame Führungsbahn 30c sowie jeweils eine separate Führungsbahn 30a, 30b. Der Hauptschlitten 15 ist auf den beiden äußeren Führungsbahnen 30a, 30c, d.h. der oberen Führungsbahn 30a und der unteren Führungsbahn 30c geführt, während die Hilfsschlitten 16a, 16b auf der unteren Führungsbahn 30c und der mittleren Führungsbahn 30b geführt sind.

Der ersten Spindelträger 13 sowie der Hauptschlitten 15 mit dem zweiten Spindelträger 14 weisen, in der in Figur 1 gezeigten Vorderansicht, eine L-Form auf, wodurch eine Aussparung 50a, 50b in dem Spindelträger 13 bzw. dem Hauptschlitten 15 mit dem zweiten Spindelträger 14 gebildet ist. Diese Aussparungen 50a, 50b stellen jeweils eine Aufnahmemöglichkeit für die ersten Hilfsschlitten 16a, 16b mit den Revolverträgern 17a, 17b dar, d.h. die ersten Hilfsschlitten können auf der mittleren und der unteren Führungsbahn 30b, 30c in eine Position gefahren werden, in der sie sich zumindest teilweise unterhalb der ersten bzw. zweiten Spindelträger 13, 14 befinden.

In der in Figur 1 gezeigten Position des Hauptschlittens 15, in der ein Abstand zwischen dem ersten und dem zweiten Spindelträger 13, 14 maximal ist, sind vorliegend die beiden ersten Hilfsschlitten 16a, 16b mit den Revolverträgern 17a, 17b in ihren Endpositionen gezeigt, in denen diese in der dargestellten Vorderansicht vollständig in die Aussparung des ersten Spindelträgers 13 bzw. des Hauptschlittens 15 mit dem zweiten Spindelträger 14 eintauchen. Dies kann beispielsweise der Fall sein, wenn die beiden Revolverträger 17a, 17b nicht benötigt werden und ein in der ersten und/oder zweiten Arbeitsspindel 13a, 13b eingespanntes Werkstück nur mittels des oberen Werkzeugträgers 18 bearbeitet wird.

Durch die Führung des Hauptschlittens 15 auf den beiden äußeren Führungsbahnen 30a, 30c erstreckt sich dieser über eine komplette Breite der ersten Trägerseite 11, wodurch eine hohe Stabilität des Hauptschlittens 15 mit dem zweiten Spindelträger 14 trotz der beschriebenen Aussparung 50b erzielt werden kann. Aufgrund des vorbestimmten Neigungswinkels, mit dem die erste Trägerseite 11 auf dem Maschinenbett 10 ausgebildet ist, kann dabei eine Ausdehnung des Hauptschlittens 15 in Y-Richtung der Werkzeugmaschine 100 begrenzt werden (siehe Figur 3). Auf diese Weise kann sowohl eine kompakte Bauweise der Werkzeugmaschine 100 als auch eine hohe Stabilität des Hauptschlittens 15 mit dem zweiten Spindelträger 14 realisiert werden. Dies gilt in gleicher Weise für den ersten Spindelträger 13, da dieser sich ebenfalls über die Breite der geneigten ersten Trägerseite 11 erstreckt.

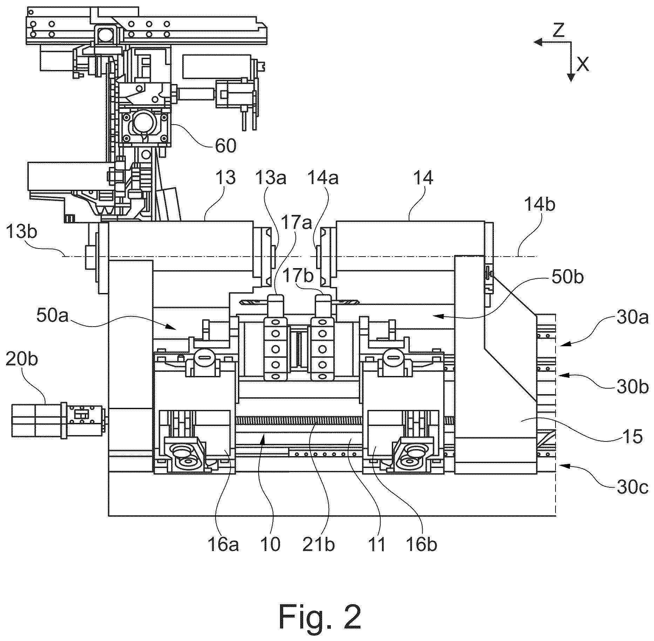

Fig. 2 zeigt einen Ausschnitt der Werkzeugmaschine aus Figur 1 in einer Vorderansicht, in dem sich der Hauptschlitten 15 mit dem zweiten Spindelträger 14 in einer nächstmöglichen Position zu einem ersten Spindelträger 13 befindet. Dies kann beispielsweise dann notwendig werden, wenn der Hauptschlitten 15 sehr nahe an den ersten Spindelträger herangefahren werden muss, um z.B. ein Werkstück von der zweiten Arbeitsspindel 14a an die erste Arbeitsspindel 13a zu übergeben.

Es wird deutlich, dass die beiden Aussparungen 50a, 50b in dem ersten Spindelträger 13 und dem Hauptschlitten 15 mit dem zweiten Spindelträger 14 einen sehr geringen Abstand zwischen den beiden Spindelträgern 13, 14 bzw. den darin gehaltenen Arbeitsspindeln 13a, 14a ermöglichen, wodurch eine Bearbeitung von kurzen wellenartigen Werkstücken deutlich vereinfacht wird. Wie bereits oben beschrieben, kann durch die Ausgestaltung des Hauptschlittens 15, der auf den beiden äußeren Führungsbahnen 30a, 30c der geneigten ersten Trägerseite 11 verfahren wird eine hohe Stabilität sowie eine geringe Breite der Werkzeugmaschine 100 erzielt werden. Zudem trägt auch die Führung der ersten Hilfsschlitten 16a, 16b auf der mittleren und unteren Führungsbahn 30b, 30c sowie deren geometrische Ausgestaltung zu der geringen Breite der Werkzeugmaschine bei, wie nachfolgend anhand von Figur 3 deutlich wird, welche die Werkzeugmaschine 100 aus den Figuren 1 und 2 in einer Seitenansicht zeigt.

Diese Ansicht zeigt insbesondere einen Blick auf die rechte Seite der in Figur 1 gezeigten Werkzeugmaschine 100, wodurch zusätzliche Komponenten derselben sichtbar werden. Im Hinblick auf die zweite Trägerseite 12 des Maschinenbetts 10 wird deutlich, dass der zweite Hilfsschlitten 18 als Fahrgestell 18 ausgebildet ist, das auf den Führungsbahnen 30d, 30e mittels Führungselementen 35 entlang der Führungsschienen 30da, 30ea verfahren werden kann. Des Weiteren sind zwei Antriebsmotoren 20d, 20e sichtbar, mittels derer das Fahrgestell 18 in Z-Richtung bzw. in Y-Richtung verfahren werden kann.

In dieser Ansicht ist außerdem der Neigungswinkel der ersten Trägerseite 11 sowie die darauf angeordneten Führungsbahnen 30a, 30b, 30c mit dem Hauptschlitten 15 und dem rechten ersten Hilfsschlitten 16b gut erkennbar. Es wird deutlich, dass die Führungsbahnen 30a, 30b, 30c stufenweise auf der geneigten ersten Trägerseite 11 angebracht sind und Führungsschienen 30aa, 30ba, 30ca aufweisen, die an einer Seite der Stufen angebracht sind, welche senkrecht zu deren Oberseite angeordnet ist. Der Hauptschlitten 15 und die beiden Hilfsschlitten 16a, 16b weisen jeweils Führungselemente 35 auf, mit denen der Hauptschlitten 15 entlang der Führungsschienen 30aa, 30ca auf der oberen und unteren Führungsbahn 30a, 30c geführt wird und die beiden Hilfsschlitten 16a, 16b entlang der Führungsschienen 30ba, 30ca auf der mittleren und unteren Führungsbahn 30b, 30c geführt werden.

Die Führungsbahnen 30a, 30b, 30c umfassen zudem Abdeckungen, die vorliegend als Bleche 30ab, 30bb ausgeführt und auf jeder Stufenoberseite derart angebracht sind, dass sie über diese hinausragen, wodurch die obere Führungsbahn 30a mit der mittleren Führungsbahn 30b und die mittlere Führungsbahn 30b mit der unteren Führungsbahn 30c überlappt. Insbesondere werden die Führungsschienen 30ba, 30ca von den Blechen 30ab, 30bb abgedeckt. Durch diese Anordnung kann verhindert werden, dass herabfallende Späne zwischen die Führungselemente 35 und die Führungsschienen 30aa, 30ba, 30ca gelangen und die Führungselemente 35 blockieren. Anhand der in Figur 3 gezeigten Ansicht der Werkzeugmaschine 100 wird zudem deutlich, dass die ersten Hilfsschlitten 16a, 16b, von denen vorliegend nur der rechte sichtbar ist, sich senkrecht zu der geneigten ersten Trägerseite 11 erstrecken. Dadurch wird analog zu dem Hauptschlitten 15 eine Ausdehnung der ersten Hilfsschlitten 16a, 16b in Y-Richtung reduziert.

Zusammenfassend verdeutlicht das in den Figuren 1 bis 3 gezeigte Ausführungsbeispiel der erfindungsgemäßen Werkzeugmaschine 100, dass mittels der Anordnung der Führungsbahnen 30a, 30b, 30c auf der geneigten ersten Trägerseite 11 und der Ausgestaltung der mit diesen verbundenen Komponenten eine Werkzeugmaschine mit kompaktem Aufbau bei gleichzeitig hoher Stabilität dargestellt werden kann.

## Patentansprüche

1. Werkzeugmaschine (100), insbesondere eine Drehmaschine oder eine Dreh-Fräsmaschine, umfassend
- ein Maschinenbett (10) mit einer ersten Trägerseite (11), auf der sich mehrere Führungsbahnen (30a, 30b, 30c) in Längsrichtung des Maschinenbetts (10) erstrecken, die bevorzugt waagrecht und bevorzugt parallel zueinander angeordnet sind;
- einen auf der ersten Trägerseite (11) angeordneten ersten Spindelträger (13), der dazu eingerichtet ist, eine erste Arbeitsspindel (13a) zu halten;
- einen auf der ersten Trägerseite (11) angeordneten Hauptschlitten (15) mit einem Hauptträger (14), der als zweiter Spindelträger (14) ausgeführt und dazu eingerichtet ist, eine zweite Arbeitsspindel (14a) zu halten, und/oder als Reitstock ausgeführt und dazu eingerichtet ist, eine Reitstockspitze zu halten;
- mindestens einen auf der ersten Trägerseite (11) angeordneten ersten Hilfsschlitten (16a, 16b) mit einem ersten Hilfsträger (17a, 17b), der zwischen dem ersten Spindelträger (13) und dem Hauptschlitten (15) mit dem Hauptträger (14) angeordnet ist,
wobei der Hauptschlitten (15) und der mindestens eine erste Hilfsschlitten (16a, 16b) jeweils auf mindestens zwei der mehreren Führungsbahnen (30a, 30b, 30c) auf der ersten Trägerseite (11) geführt und in Längsrichtung des Maschinenbetts (10) verfahrbar sind, und eine gemeinsame Führungsbahn (30a, 30b, 30c) und mindestens eine separate Führungsbahn (30a, 30b, 30c) aufweisen.

2. Werkzeugmaschine (100) nach Anspruch 1, wobei der Hauptschlitten (15) mindestens auf zwei äußeren Führungsbahnen (30a, 30c) auf der ersten Trägerseite (11) geführt ist, und der mindestens eine erste Hilfsschlitten (16a, 16b) auf mindestens einer mittleren und auf einer der beiden äußeren Führungsbahnen (30a, 30c) geführt ist.

3. Werkzeugmaschine (100) nach Anspruch 1 oder 2, wobei der mindestens eine erste Hilfsschlitten (16a, 16b) auf der mindestens einen mittleren Führungsbahn (30b) und auf einer äußeren Führungsbahn (30c) geführt ist, die an eine äußere Längsseite des Maschinenbetts (10) angrenzt.

4. Werkzeugmaschine (100) nach einem der vorstehenden Ansprüche, wobei das Maschinenbett (10) als Schrägbett ausgeführt ist, dessen erste Trägerseite (11) in einem vorbestimmten Neigungswinkel zu einer Querrichtung des Maschinenbetts (10) angeordnet ist.

5. Werkzeugmaschine (100) nach einem der vorstehenden Ansprüche, wobei die mehreren Führungsbahnen (30a, 30b, 30c) auf der ersten Trägerseite (11) derart ausgebildet sind, dass eine erste äußere Führungsbahn (30a) zumindest teilweise mit der mindestens einen mittleren Führungsbahn (30b) überlappt, und die mindestens eine mittlere Führungsbahn (30b) zumindest teilweise mit einer zweiten äußeren Führungsbahn (30c) überlappt.

6. Werkzeugmaschine (100) nach Anspruch 5, wobei in überlappenden Abschnitten der Führungsbahnen (30a, 30b, 30c) Führungsschienen (30aa, 30ba, 30ca) angeordnet sind, die dazu eingerichtet sind, mit Führungselementen (35) an dem Hauptschlitten (15) und dem mindestens einen Hilfsschlitten (16a, 16b) zusammenzuwirken, um diese auf den jeweiligen Führungsbahnen (30a, 30b, 30c) zu verfahren.

7. Werkzeugmaschine (100) nach einem der vorstehenden Ansprüche, wobei der Hauptschlitten (15) und der mindestens eine erste Hilfsschlitten (16a, 16b) parallel zu Spindelachsen (13b, 14b) der ersten und zweiten Arbeitsspindel (13a, 14a) oder parallel zu einer Spindelachse (13b) der ersten Arbeitsspindel (13a) und einer Achse durch die Reitstockspitze verfahrbar sind.

8. Werkzeugmaschine (100) nach Anspruch 7, wobei die zweite Arbeitsspindel (14a) oder die Reitstockspitze der ersten Arbeitsspindel (13a) zugewandt sind, und wobei die Spindelachse (14b) der zweiten Arbeitsspindel (14a) oder die Achse durch die Reitstockspitze parallel, insbesondere koaxial zu der Spindelachse (13b) der ersten Arbeitsspindel (13a) ausgerichtet ist.

9. Werkzeugmaschine (100) nach mindestens einem der vorstehenden Ansprüche, wobei der erste Spindelträger (13) und/oder der Hauptschlitten (15) mit dem Hauptträger (14) derart ausgebildet sind, dass sie in einer Vorderansicht eine L-Form aufweisen.

10. Werkzeugmaschine (100) nach Anspruch 9, wobei die erste Arbeitsspindel (14a) in einem horizontalen Schenkel des L-förmigen ersten Spindelträgers (13) aufgenommen ist, und die zweite Arbeitsspindel (14a) oder die Reitstockspitze in dem Hauptträger (14) aufgenommen ist, der einen horizontalen Schenkel des L-förmigen Hauptschlittens (15) mit dem Hauptträger (14) bildet.

11. Werkzeugmaschine (100) nach Anspruch 9 oder 10, wobei mittels der L-Form des ersten Spindelträgers (13) und/oder des Hauptschlittens (15) mit dem Hauptträger (14) in diesem eine Aussparung (50a, 50b) ausgebildet ist, die dazu eingerichtet ist, den mindestens einen ersten Hilfsschlitten (16a, 16b) mit dem ersten Hilfsträger (17a, 17b) aufzunehmen.

12. Werkzeugmaschine (100) nach Anspruch 4 und 11, wobei zwei erste Hilfsschlitten (16a, 16b) mit jeweils einem ersten Hilfsträger (17a, 17b) auf der mindestens einen mittleren und der unteren Führungsbahn (30b, 30c) der geneigten ersten Trägerseite (11) geführt und in Längsrichtung des Maschinenbetts (10) verfahrbar sind und der erste Spindelträger (13) dazu eingerichtet ist, einen ersten der beiden ersten Hilfsschlitten (16a, 16b) aufzunehmen, und der Hauptschlitten (15 mit dem Hauptträger (14) dazu eingerichtet ist, einen zweiten der beiden ersten Hilfsschlitten (16a, 16b) aufzunehmen.

13. Werkzeugmaschine (100) nach mindestens einem der vorstehenden Ansprüche ferner umfassend
- eine zweite Trägerseite (12), die angrenzend an die erste Trägerseite (11) parallel zur Querrichtung des Maschinenbetts (10) angeordnet ist, wobei sich auf der zweiten Trägerseite (12) mehrere Führungsbahnen (30d, 30e) in Längsrichtung des Maschinenbetts (10) erstrecken, die bevorzugt waagrecht und bevorzugt parallel zueinander angeordnet sind; und
- mindestens einen auf der zweiten Trägerseite (12) angeordneten zweiten Hilfsschlitten (17) mit einem zweiten Hilfsträger (18), wobei der zweite Hilfsschlitten (17) auf mindestens zwei der mehreren Führungsbahnen (30d, 30e) auf der zweiten Trägerseite (12) geführt und parallel zu einer Verfahrrichtung des mindestens einen ersten Hilfsschlittens (16a, 16b) verfahrbar ist.

14. Werkzeugmaschine (100) nach mindestens einem der vorstehenden Ansprüche, wobei der erste Hilfsträger (17a, 17b) des mindestens einen ersten Hilfsschlittens (16a, 16b) als Lünettenträger, Revolverträger, Werkzeugträger oder Messmittelträger ausgebildet ist.

15. Werkzeugmaschine (100) nach mindestens Anspruch 13 oder 14, wobei der zweite Hilfsträger (18) des mindestens einen zweiten Hilfsschlittens (17) als Werkzeugträger ausgebildet ist.
